# EUROPEAN PATENT APPLICATION

(11) **EP 2 764 976 A2**
(43) Date of publication of application: **13.08.2014**
(21) Application number: 14154758.8
(22) Date of filing: 11.02.2014
(51) Int. Cl.: B29C 47/68, B29C 47/08

(54) **Filter mesh assembly for a plastic extruder filter assembly and method of filtering recycled material**

(30) Priority: 12.02.2013 US 201313765005
(71) Applicant: Purolator Facet, Inc., Greensboro NC 27409 (US)
(72) Inventor: Hopkins, Sam Arthur, Belews Creek, NC North Carolina 27009 (US); Vande Guchte, Mitchell Scott, Wake Forest, NC North Carolina 27587 (US); Rhoads, Scott Allen, High Point, NC North Carolina 27262 (US)
(74) Representative: Pronovem

(57) **Abstract**

A filter mesh assembly (100) configured to control particulate material in a filter assembly (100) of a plastic extruder. The filter mesh assembly (100) includes a wire mesh filter having a square weave construction defining a predetermined pore size with the wire mesh filter having flattened surfaces of adjacent wires on the same plane and configured to allow a portion of the scraper (116) to move across the wire mesh filter assembly (100). The assembly (100) also includes a wire mesh supporter having a square weave construction and a characteristic of sufficient strength to support the wire mesh filter against a breaker plate (112). The wire mesh filter and the wire mesh supporter are diffusion bonded to each other as a unified structure and disposed in a housing between an inlet and breaker plate (112). The configuration allows passage of molten plastic through the breaker plate (112) and lateral movement of material, parallel to the breaker plate (112).

## Description

### FIELD OF THE INVENTION

This invention relates to a filter mesh assembly in a filter assembly for filtering molten, recycled plastic, and more particularly to a filter mesh assembly that allows both passage of molten plastic to a breaker plate in the filter assembly and lateral movement of the molten plastic parallel to the breaker plate.

### BACKGROUND OF THE INVENTION

Many methods are employed in the recycling of plastics. All these methods have a common problem; the removal of contaminant(s). Typically contaminant(s) are removed by employing several different levels of filtration throughout the recycling process. Removal of the coarse contaminant(s) is typically accomplished first. Current technology employs the use of apparatus in which molten polymer is forced into a chamber with an inlet(s) and two or more outlets.

Typically placed between the inlet and at least one of the outlet ports is a filtration device that is sealed in such a way to prevent polymer flow directly from the inlet to the outlet without passing through a filter device. Filter assemblies typically employ the use of at least one outlet port that allows for molten polymer to flow directly from the inlet to the outlet, this is the waste port.

Within the molten polymer chamber of the filter assembly, up-stream of and typically in intimate contact with the filter device, is a scraping device. The waste port is utilized when sufficient contaminant(s) has built up on the filter surface to cause a pressure drop that meets a predetermined set-point. When the pressure drop across the filter meets the set-point, the outlet port(s) valves down-stream of the filter close and the waste port valve opens. While the waste port valve is open, the scraper device is activated, removing the contaminant (s) from the filter surface, forcing contaminant(s) out the waste port. When the scraping device has completed the cleaning, the pressure drop across the filter is reduced below a specified set-point, waste port valve closes and outlet port valve down-stream of the filter opens and the cycle repeats as needed. The waste is collected for disposal or further processing.

The apparatus of the present disclosure must also be of construction which is both durable and long lasting, and it should also require little or no maintenance to be provided by the user throughout its operating lifetime. In order to enhance the market appeal of the apparatus of the present disclosure, it should also be of inexpensive construction to thereby afford it the broadest possible market. Finally, it is also an objective that all of the aforesaid advantages and objectives be achieved without incurring any substantial relative disadvantage.

### SUMMARY OF THE INVENTION

The disadvantages and limitations of the background art discussed above are overcome by the present disclosure.

According to a first aspect of the invention, there is provided a filter mesh assembly configured to control particulate material in a filter assembly of a recycled plastic extruder. The filter assembly includes a housing defining an inlet and an outlet. The housing also defines a discharge port with a breaker plate located between the inlet and the outlet. The recycled plastic extruder includes a scraper assembly which is configured to sweep across the filter mesh assembly to remove the particulate material caught by the filter mesh.

The filter mesh assembly comprises a filter media, a wire mesh assembly with the wire mesh assembly disposed in the housing between the inlet and the breaker plate.

The filter media defines a plurality of orifices configured to pass the molten plastic entering the recycled plastic extruder. The wire mesh assembly includes a square weave construction defining a predetermined pore size, with the wire mesh assembly diffusion bonded to the filter media.

The filter media prevents passage of particular material and the wire mesh assembly allows both passage of the molten plastic to the breaker plate and lateral movement of the molten plastic parallel to the breaker plate.

In another embodiment, at least one additional wire mesh assembly is diffusion bonded to the first or other wire mesh assembly with the one additional wire mesh assembly configured with a wire diameter larger than the wire diameter of the other wire mesh assembly. In another embodiment, the wire mesh assembly is circular and defines an outer circumference and an inner circumference with the inner circumference configured to receive a portion of the scraper assembly.

According to a second aspect of the invention, there is further provided a filter mesh assembly configured to control particulate material in a filter assembly of a recycled plastic extruder. The filter assembly includes a housing defining an inlet, and an outlet, a discharge port, a breaker plate, with the breaker plate located between the inlet and outlet, and a scraper assembly.

The filter mesh assembly includes a filter disc and a wire mesh support layer for lateral flow. The filter disc defines a plurality of orifices with a predetermined pore size configured to pass molten plastic. The wire mesh has a square weave construction allowing lateral flow of molten plastic to breaker plate throughholes, with the wire mesh diffusion bonded to the filter disc.

The filter mesh assembly is disposed in the housing between the inlet and the breaker plate with the filter disc preventing passage of particulate material and the wire mesh allowing both, passage of molten plastic to the breaker plate and lateral movement of the molten plastic parallel to the breaker plate.

In a filter mesh assembly in accordance with any of the first and second aspects of the invention, the wire mesh preferably defines at least one flattened surface of adjacent wires on the same plane over the total area of the wire mesh. The filter mesh assembly may be configured to allow a portion of the scraper to move across the filter disc to remove particulate material from the filter disc.

According to a third aspect of the invention, there is further provided a filter mesh assembly configured to control particulate material in a filter assembly of a recycled plastic extruder. The filter assembly includes a housing defining an inlet, an outlet, a discharge port, a breaker plate, with the breaker plate located between the inlet and the outlet, and a scraper assembly.

The filter mesh assembly includes a wire mesh filter having a square weave construction defining a predetermined pore size. The wire mesh filter has a flattened surface of adjacent wires on the same plane and configured to allow a portion of the scraper to move across the wire mesh filter to remove particulate material from the wire mesh filter. A wire mesh supporter, having a square weave construction, and a characteristic of sufficient strength to support the wire mesh filter against the breaker plate is coupled to the wire mesh filter.

The wire mesh filter and the wire mesh supporter are diffusion bonded to each other as a unified structure and disposed in the housing between the inlet and the breaker plate with the filter mesh assembly preventing passage of particulate material and allowing both passage of molten plastic through the breaker plate and the lateral movement of material, parallel to the breaker plate.

The filter mesh assembly in accordance with any of the first, second and third aspects preferably further comprises at least one additional wire mesh having a square weave construction coupled to the other wire mesh or one of the other wire meshes, e.g. by diffusion bonding, with the one additional wire mesh configured with a wire diameter larger than the wire diameter of the other wire mesh or either of the other wire meshes.

Preferably, the filter mesh assembly defines an outer circumference and an inner circumference, with the inner circumference configured to receive a portion of the scraper assembly. Most preferably, the inner circumference further defines a pair of notches diametrically opposite each other and configured to prevent the filter mesh assembly from rotating in the housing.

According to preferred embodiments of the invention, the total open area of the pore size of the filter media of the filter media, the wire mesh or the filter mesh assembly is in the range of 35% to 60% of the total area of the filter media, the wire mesh or the filter mesh assembly, respectively.

There is additionally provided a method to filter particulate material from a stream of molten, recycled plastic with a filter assembly and to increase flow-through of the molten, recycled plastic through the filter assembly. The filter assembly includes a housing defining an inlet, an outlet, a discharge port, a breaker plate, with the breaker plate located between the inlet and the outlet, and a scraper assembly.

The method includes installing at least one filter mesh assembly in the filter assembly. The filter mesh assembly includes a filter media, with the filter media defining a plurality of orifices configured to pass molten plastic. The filter mesh assembly also includes a wire mesh assembly having a square weave construction defining a predetermined pore size, with the wire mesh assembly diffusion bonded to the filter media.

The method also includes disposing at least one filter mesh assembly between a portion of the scraper assembly and the breaker plate, and scraping filtered particulate material with the scraper assembly.

The method to filter particulate material includes a filter media that is defined as a filter disc, with the filter disc defining a plurality of orifices and configured to allow a portion of the scraper to move across the filter disc to remove particulate material.

In another embodiment, the method to filter particulate material provides a wire mesh assembly is a wire mesh supporter having a square weave construction and bonded to the filter media to form a unified filter mesh assembly. The wire mesh supporter having a characteristic of sufficient strength to support the unified filter mesh assembly against the breaker plate. The method also includes installing the unified filter mesh assembly between the portion of the scraper assembly and the breaker plate with the unified filter mesh assembly configured to allow a portion of the scraper to move across the filter media to remove particulate material.

The apparatus of the present invention is of a construction which is both durable and long lasting, and which will require little or no maintenance to be provided by the user throughout its operating lifetime. Finally, all of the aforesaid advantages and objectives are achieved without incurring any substantial relative disadvantage.

### DESCRIPTION OF THE DRAWINGS

These and other advantages of the present disclosure are best understood with reference to the drawings, in which:
FIG. 1 is a schematic top view of an exemplary embodiment of a filter assembly for molten plastic of a recycled plastic extruder, including a breaker plate and scraper assembly;
FIG. 1A is a perspective view of the molten recycled plaster extruder shown in FIG. 1 illustrating a circular configuration of the breaker plate and interior of the housing;
FIG. 2 is a detail view of a portion of the filter assembly illustrated in FIG. 1 illustrating a filter plate and breaker plate and also illustrates a portion of a scraper in contact with the filter plate;
FIG. 3 is a schematic view illustrating a typical flow of molten plastic through the filter plate and breaker plate of the filter assembly illustrated in FIG. 2;
FIG. 4 is a detail view of a portion of an exemplary embodiment of a filter mesh assembly disposed between the portion of scraper and breaker plate illustrated in FIG. 2;
FIG. 5 is a detailed view of a portion of an exemplary embodiment of a wire mesh assembly disposed between the breaker plate and a portion of the scraper;
FIG. 6 is a micrograph photograph of an exemplary embodiment of a diffusion bonded laminate screen assembly;
FIG. 7 is a schematic view illustrating a portion of a filter mesh assembly and breaker plate and also illustrates a portion of a scraper in contact with the filter assembly;
FIG. 8 is a detail view of a portion of an exemplary embodiment of a filter mesh assembly illustrated in FIG. 7;
FIG. 9 is a chart listing various exemplary embodiments of filter mesh assemblies disclosed herein, including mesh layer function, micron rating, wire count (wires per inch), and wire diameter (inches) for the several listed assemblies;
FIG. 10 is a partial exemplary embodiment of the wire mesh assembly illustrated in FIG. 5 detailing a square weave of the several wire mesh layers and the flattened surfaces of the wires on the same plane, the wire mesh layers are diffusion bonded together as a unitary assembly;
FIG. 11 is a view illustrating molten plastic flow through the wire mesh assembly positioned against a breaker plate illustrated in FIG. 4 and illustrating lateral flow of the molten plastic between the wire mesh assembly and the breaker plate to an orifice in the breaker plate.

### DETAILED DESCRIPTION OF THE EXEMPLARY EMBODIMENTS

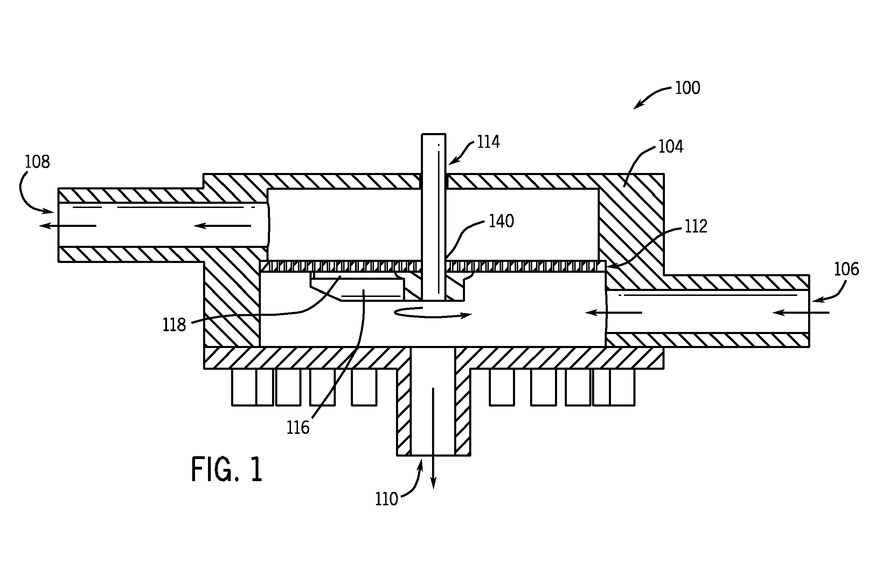

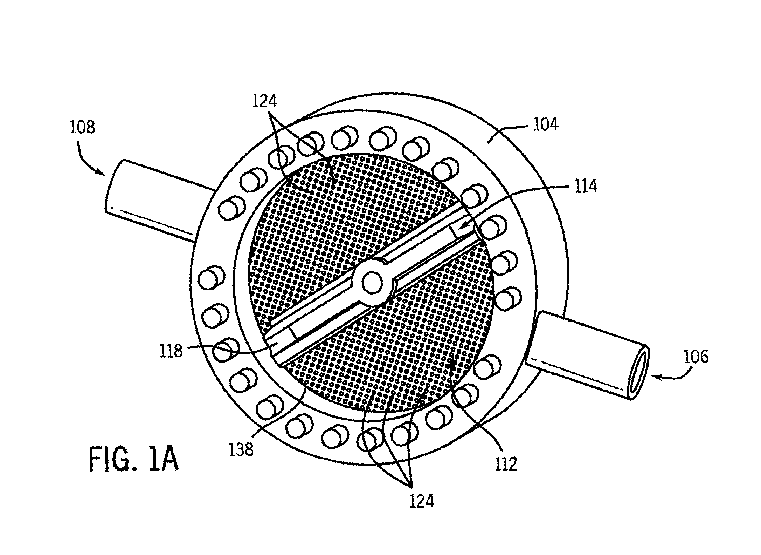

FIGS. 1 and 1A illustrate an exemplary embodiment of an extruder 100 used with recycled, molten plastic. The plastic enters the extruder housing 104 at an inlet 106, passes through a filter media 122 and a breaker plate 112, to an outlet 108. The molten plastic is typically hot to promote flow and is under pressure, also to promote flow. For purposes the terms filter media, filter disc, filter plate, and filter mesh assembly 122 are synonymous. Further, the terms filter disc and breaker plate apply to filter mesh assemblies where the filtration layer is a perforated sheet with the perforations defining the micron rating of the filter media.

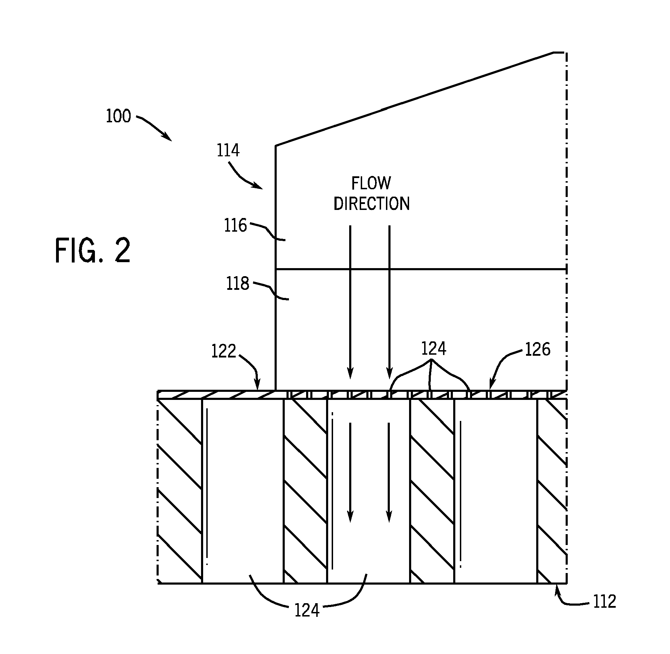

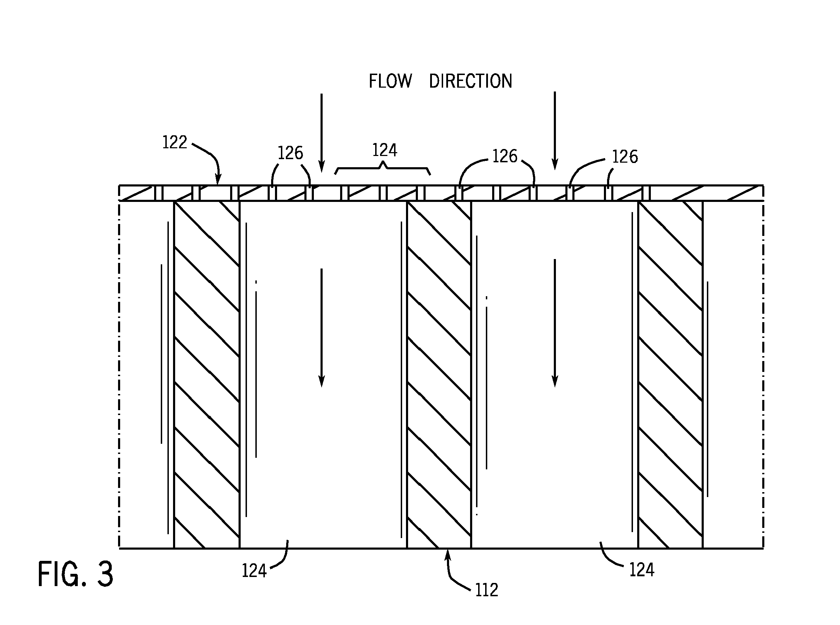

The filtration device is typically comprised of two (2) components: filter media and breaker plate. (See FIGS. 2 and 3) The filter media is supported by a breaker plate; which supports the filter media at pressures beyond what the filter media is capable of supporting by itself. The breaker plate is usually made of a thick perforated metal plate with sufficient strength to support the filter media with a typical pressure drop of 1,000 pounds per square inch or more.

Perforations, in the breaker plate, range in size and shape but are generally round, having a diameter range of 1/8th inch to 1/4 inch. The current technology for the filter media employs the use of perforated material. The diameter of the perforated hole establishes the micron rating of the filter. There are many shortfalls of the current technology: high cost, poor open area and poor drainage specifically.

### High Costs:

There are several methods for the manufacture of the perforated filter media. Some of these methods include but are not limited to: traditional perforating punching, traditional drilling, laser drilling and electron beam drilling. It is recognized that each of these methods has advantages and disadvantages for any given micron rating but for separate reasons all are significantly expensive. Traditional perforated punching, punches groups of holes at a single cycle of a machine. The punch tooling is expensive and costly to maintain. Traditional drilling, drills one hole at a time and requires the use of many drills. Laser and electron beam drilling drill one hole at a time, but can be done very fast. However, both laser drilling and electron beam drilling require post drilling processes to remove slag.

### Poor Open Area:

All of the above manufacturing methods, for a variety of reasons, produce a part that has a total open area in the range of 8 to 14% of surface area. This means that approximately 86% to 92% of the filter media disc area is solid and provides no filtration or flow through that portion of the filter media, i.e. the molten plastic is blocked. This results in the pressure drop across the filter media building up more quickly, requiring cleaning by the wiper blade more frequently, the generation of more waste, and more time for the process.

In conventional filter assemblies, the filter media orifices are blocked by portions of the breaker plate, See FIGS. 2 and 3. Such blockage reduces the flow-through of the molten plastic and increases the frequency of scraper operation.

### Lack of Drainage:

For the specific application of filtering molten polymer the open area of the filter media and the breaker plate work together as multipliers to reduce the available flow area. This is caused when a solid portion of a breaker plate is directly behind a hole of the filter media, blocking the hole from flow. If there is no drainage as in the case when flat perforated sheets are used as the filter media, the realized open area of the filter media breaker plate assembly can be calculated by multiplying the percent open area of each component together.

### Open Area Calculations:

For a perforated sheet with staggered center holes: D² x 90.69/C² where "D" = the diameter of the hole and "C" = the center distance. Typically filter media that uses perforations to create the pores, regardless of manufacturing method, has total open areas typically ranging from 8 to 14% of surface area of the media. Inspected exemplary samples were measured to have 0.01575" diameter holes on 0.0472" centers, yielding a resultant open area of 10.1%. The supporting breaker plate has an estimated hole pattern of 3/16" diameter holes on 5/16" center lines; yielding an open area of 32.6%. The resultant open area of the assembly is the product of the two (2) open areas or 3.3%.

The present disclosure resolves all three of the above-mentioned issues. Woven wire mesh creates pores adjacent to the intersections of wires forming the mesh. Typically, woven wire mesh has an open area of 35% to 60%.

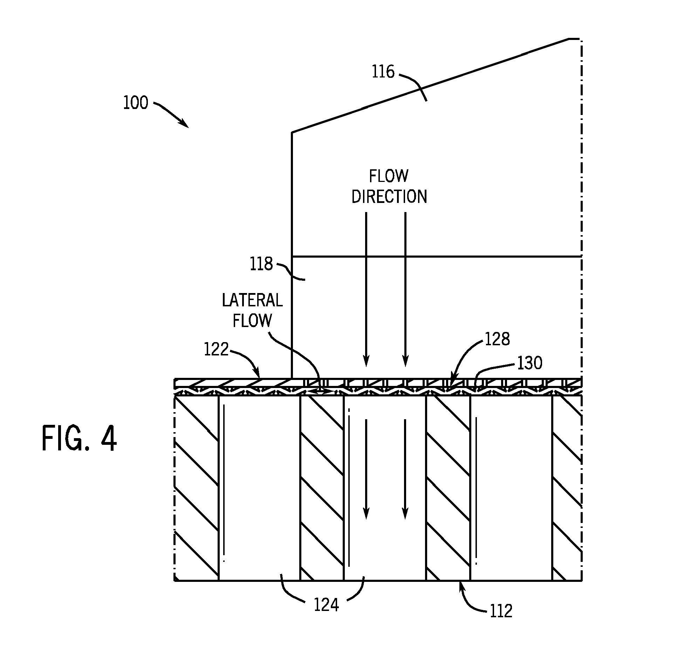

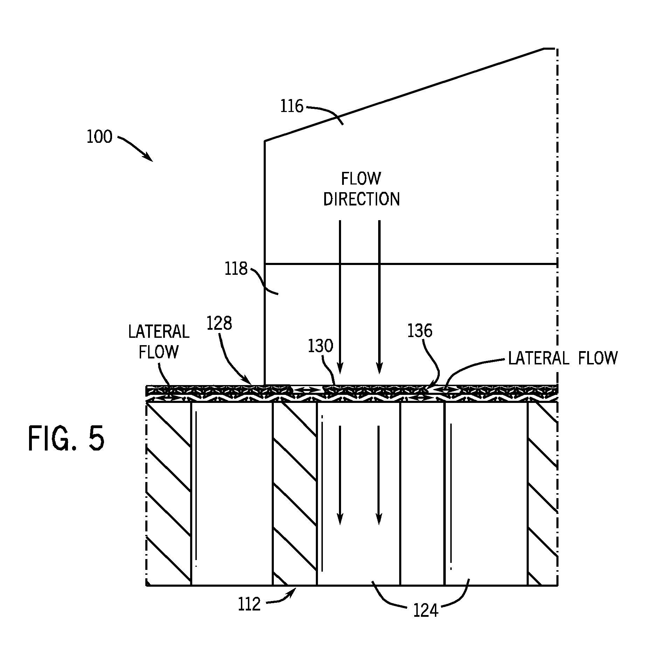

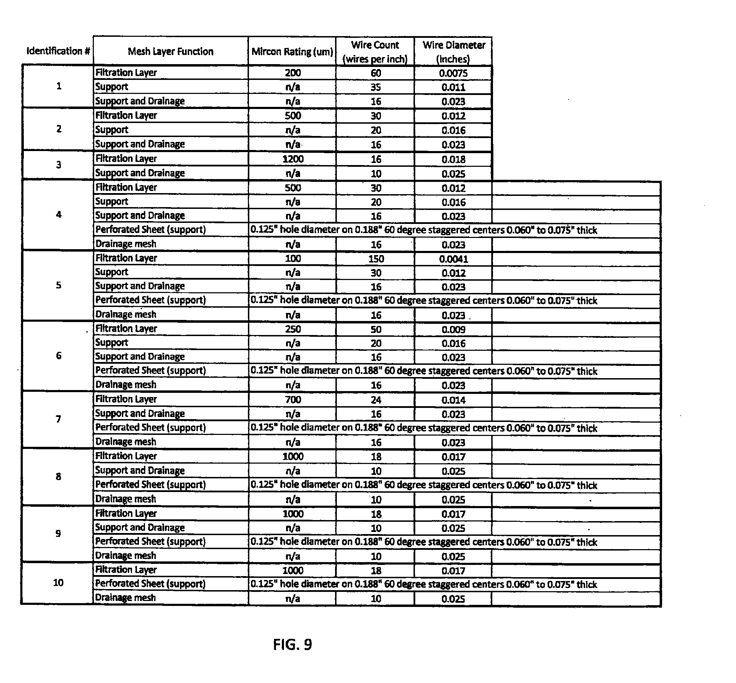

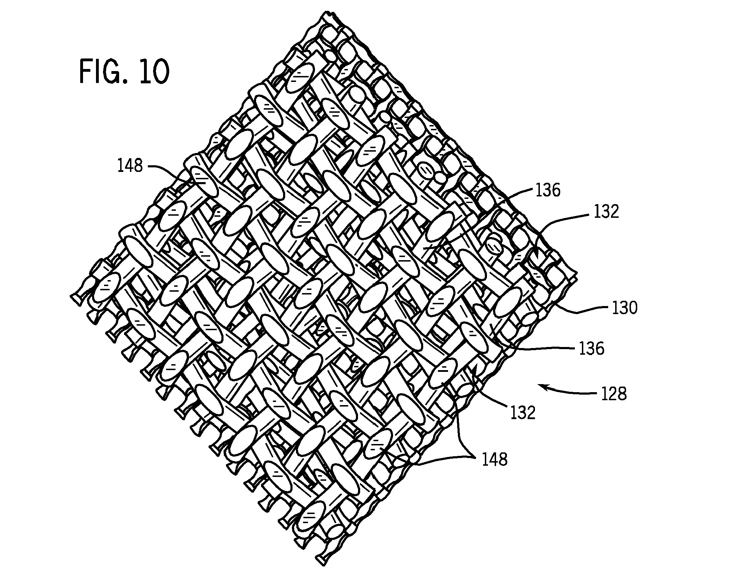

Although using a single layer of woven wire mesh 128 (See FIG. 4) was considered as well as welded wire mesh, this disclosure teaches, in one embodiment, utilization of two (2) or more layers of woven wire mesh diffusion bonded to form a single porous laminate. (See FIGS. 5-7) The laminate consists of a top layer of mesh having typically a square weave construction 132 and having sufficient wire count and wire diameter to form the desired pore size: Examples of embodiments and structure arrangements are illustrated in the chart in FIG. 9. The top layer is calendared to a thickness sufficient to make the surface of the mesh relatively smooth, the flattened surfaces 148 of adjacent wires are on or near the same plane which allows for the removal of particles trapped by the mesh filter assembly 128 when a portion 116 of a scraper assembly 114, for example a blade moves across the surface of the mesh. A second and/or subsequent layer(s) are mesh 136, typically square weave 132, having sufficient wire count and diameter to accomplish both the support of the filter layer across the breaker plate 112 holes and allow for cross flow, also referred to as lateral flow, drainage, between the down-stream side of the filter mesh layer and the breaker plate throughholes. (See FIGS. 5, 6, 7, 8, and 10)

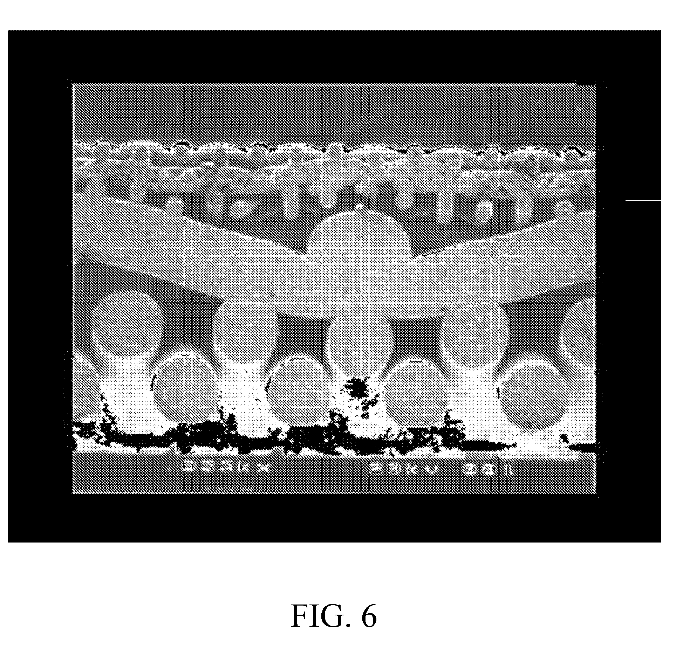

The wire count of the down-stream mesh(s) typically has fewer wires per inch than the filter mesh such that any particle that passes through the filter mesh is also able to pass through the down- stream mesh. (See Fig. 5) The wire diameter of the down-stream mesh is typically large enough such that any particle that passes through the filter mesh can also move parallel, i.e. lateral flow, to the surface of the filter mesh 128, 136 sufficiently to pass through the breaker plate perforations. (See Figs. 6-7) With the filter media 122 being 35 to 60% open, and there being sufficient drainage mesh between the filter media and the breaker plate, the breaker plate 112 open area becomes the limiting factor in flow. With more open area, the amount of contaminant (s) that can be held, for any given pressure drop, is increased. As a result, there are less purge cycles, more throughput and less waste produced.

FIG. 6 illustrates a micrograph photograph of an exemplary embodiment of a diffusion bonded laminate screen assembly. An example of such an assembly is a Poroplate® media marketed by the Assignee of this application. Diffusion bonding is a type of joining process by which two metals (which may be dissimilar), are bonded together. The two metals are heated under pressure causing atoms of the two metals to migrate across the points of contact of the metals. In the present application, the points of contact are typically at the intersection of wires forming the woven pattern. The wire mesh assembly 128 is illustrated and includes five separate layers of wire mesh that are bonded together as a unitary unit and includes flattened surfaces to facilitate movement of a blade 118 of a scraper assembly 114 to remove particulate material trapped by the filter disc.

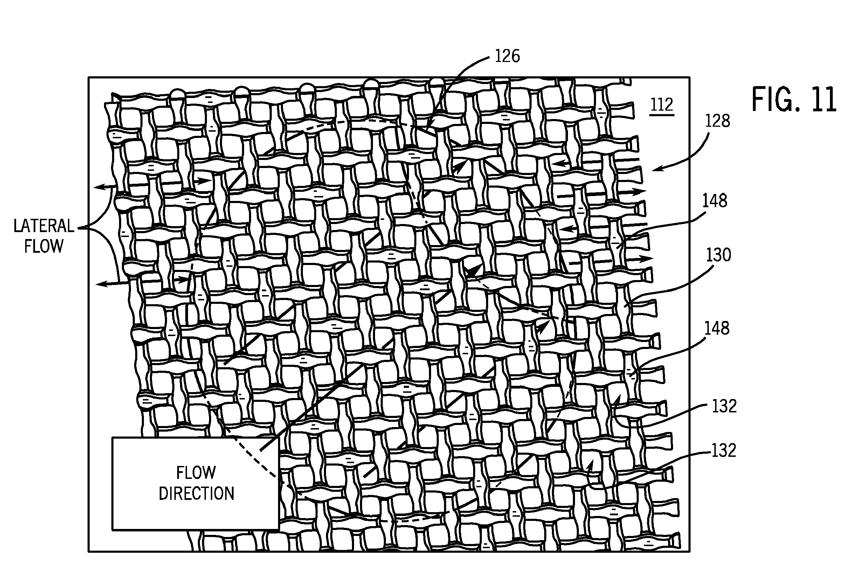

In a typical assembly, in accordance with the present disclosure, a filtration layer is the first layer of wire mesh 130 that is in contact with the blade 118 of the scraper assembly 114. The filtration layer is typically made from a wire mesh 130 in a woven condition, that results in a micron rating at the desired end product micron rating. (See FIG. 9) A support mesh immediately downstream of the filtration layer typically has a micron rating larger than the filtration layer. The mesh 130/136 is sufficient to support the filter layer against the pressure drop across the holes of the breaker plate 112. Each of the layers, as described above, allows for lateral flow parallel to the breaker plate 112 (See FIG. 11) to provide additional flow through of the molten plastic. The hole diameter of any breaker plate 112 needs to be larger than the micron rating of the filtration layer of the mesh assembly 128 and typically is a minimum of three times larger than the micron rating of the filtration layer. The minimum hole diameter of the break plate is often determined by the minimum hole diameter that can be reasonably manufactured in the material of the breaker plate 112 for a given thickness. The breaker plate thickness typically is 0.125 inches or more.

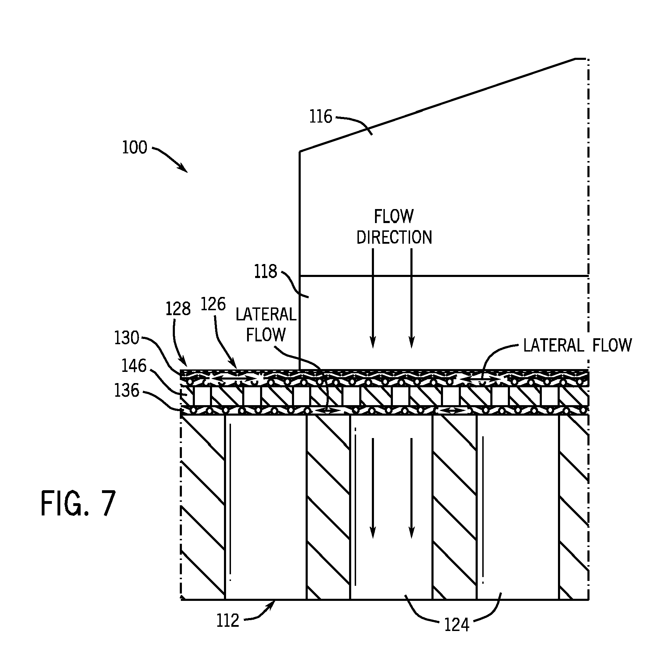

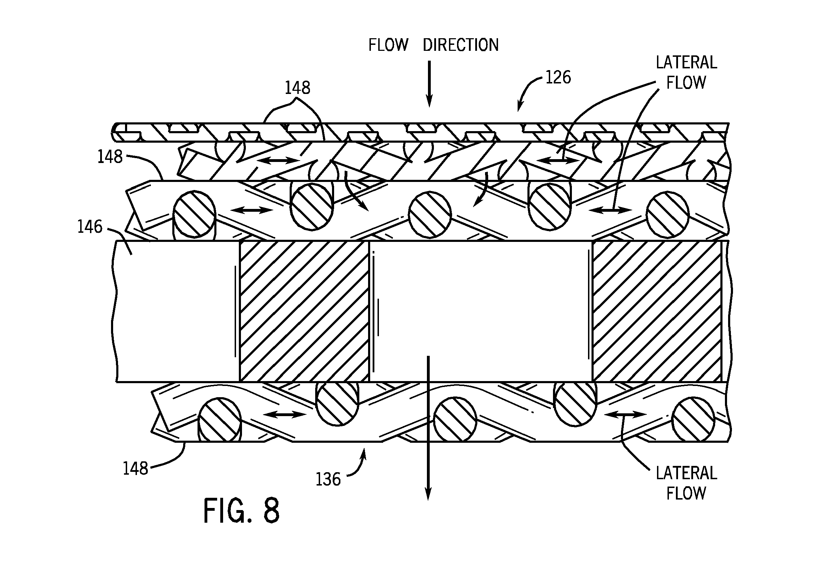

In one embodiment, as illustrated in FIGS. 7 and 8, the perforated support plate 146 is typically 0.06 inches - 0.075 inches thick with one-eighth inch holes on 0.188 inch sixty degrees staggered centers. Such configuration provides for a 36 percent open area of the entire area of the perforated support plate 146. It should be noted that a typical open area percentage is thirty to forty percent. The orifice pattern of a plurality of orifices 124 can have a straight pattern or an offset pattern, i.e. sixty degrees staggered centers, or such other staggered center arrangement as determined by a user for a specific application and hole geometry.

As illustrated in FIGS. 1 and 1A, a typical recycled plastic extruder 100 is circular in shape. The breaker plate 112 and filter mesh assembly 102 is also circular to fit within the housing 104. The filter mesh assembly 102 defines an outer circumference 138 and an inner circumference 140. The inner circumference 140 is configured to receive a portion 116 of the scraper assembly 114 (see Figs 4,5 and 7) . In a preferred embodiment, the inner diameter 140 of the filter mesh assembly 102 defines a pair of notches diametrically opposite each other and configured to prevent the filter mesh assembly from rotating in the housing 104. The exact location and configuration of the notches will be dependent on the particular structure of the housing 104 in recycled plastic extruder 100, however one ordinarily skilled in the art will understand that the notches defined by the filter mesh assembly 102 should correspond to protrusions defined in the housing 104.

For purposes of this disclosure, the term "coupled" means the joining of two components (electrical or mechanical) directly or indirectly to one another. Such joining may be stationary in nature or moveable in nature. Such joining may be achieved with the two components (electrical or mechanical) and any additional intermediate members being integrally formed as a single unitary body with one another or the two components and any additional member being attached to one another. Such adjoining may be permanent in nature or alternatively be removable or releasable in nature.

Although the foregoing description of the present mechanism has been shown and described with reference to particular embodiments and applications thereof, it has been presented for purposes of illustration and description and is not intended to be exhaustive or to limit the disclosure to the particular embodiments and applications disclosed. It will be apparent to those having ordinary skill in the art that a number of changes, modifications, variations, or alterations to the mechanism as described herein may be made, none of which depart from the spirit or scope of the present disclosure. The particular embodiments and applications were chosen and described to provide the best illustration of the principles of the mechanism and its practical application to thereby enable one of ordinary skill in the art to utilize the disclosure in various embodiments and with various modifications as are suited to the particular use contemplated. All such changes, modifications, variations, and alterations should therefore be seen as being within the scope of the present disclosure as determined by the appended claims when interpreted in accordance with the breadth to which they are fairly, legally, and equitably entitled.

## Claims

1. A filter mesh assembly configured to control particulate material in a filter assembly of a recycled plastic extruder, the filter assembly including a housing defining an inlet, an outlet, a discharge port, a breaker plate, with the breaker plate located between the inlet and outlet, and a scraper assembly, the filter mesh assembly comprising:
a filter media, the filter media defining a plurality of orifices configured to pass molten plastic; and
a wire mesh assembly having a square weave construction defining a predetermined pore size, with the wire mesh assembly diffusion bonded to the filter media,
the filter mesh assembly disposed in the housing between the inlet and the breaker plate with the filter media preventing passage of particulate material and the wire mesh assembly allowing both, passage of molten plastic to the breaker plate and lateral movement of the molten plastic parallel to the breaker plate.

2. The filter mesh assembly of Claim 1, further comprising at least one additional wire mesh assembly having a square weave construction coupled to the other wire mesh assembly by diffusion bonding, with the one additional wire mesh assembly configured with a wire diameter larger than the wire diameter of the other wire mesh assembly.

3. The filter mesh assembly of Claim 1, wherein the filter mesh assembly defines an outer circumference and an inner circumference, with the inner circumference configured to receive a portion of the scraper assembly.

4. The filter mesh assembly of Claim 3, with the inner circumference further defining a pair of notches diametrically opposite each other and configured to prevent the filter mesh assembly from rotating in the housing.

5. The filter mesh assembly of Claim 1 further comprising, the total open area of the pore size of the filter media is in the range of 35% to 60% of the total area of the filter media.

6. The filter mesh assembly of Claim 1 further comprising, the filter media defining at least one flattened surface of adjacent wires on the same plane over the total area of the filter media.

7. The filter mesh assembly of Claim 1 further comprising, the filter mesh assembly configured to allow a portion of the scraper to move across the filter media to remove particulate material from the filter media.

8. A method to filter particulate material from a stream of molten, recycled plastic with a filter assembly and to increase flow-through of the molten, recycled plastic through the filter assembly, the filter assembly including a housing defining an inlet, an outlet, a discharge port, a breaker plate, with the breaker plate located between the inlet and outlet, and a scraper assembly, the method comprising:
installing at least one filter mesh assembly in the filter assembly, the filter mesh assembly comprising:
a filter media, the filter media defining a plurality of orifices configured to pass molten plastic; and
a wire mesh assembly having a square weave construction defining a predetermined pore size, with the wire mesh assembly diffusion bonded to the filter media,
disposing the at least one filter mesh assembly between a portion of the scraper assembly and the breaker plate; and
scraping filtered particulate material with the scraper assembly.

9. The method to filter particulate material of Claim 8, wherein the filter media is a filter disc, with the filter disc defining a plurality of orifices and configured to allow a portion of the scraper to move across the filter disc to remove particulate material.

10. The method to filter particulate material of Claim 8, wherein the wire mesh assembly is a wire mesh supporter having a square weave construction and bonded to the filter media to form a unified filter mesh assembly, the wire mesh supporter having a characteristic of sufficient strength to support the unified filter mesh assembly against the breaker plate, and
installing the unified filter mesh assembly between the portion of the scraper assembly and the breaker plate with the unified filter mesh assembly configured to allow a portion of the scraper to move across the filter media to remove particulate material.

11. The method to filter particulate material of Claim 8, wherein the wire mesh assembly includes a wire mesh filter media supported by a perforated support plate having perforations larger than the filter media and having a wire mesh drainage media of square weave construction allowing lateral flow of molten plastic between the perforated support plate and the breaker plate.

12. The method of filter particulate material of Claim 11, further comprising:
forming a unified structure of the wire mesh filter media, the perforated support plate and the wire mesh drainage media with diffusion bonding.
